# EUROPÄISCHE PATENTSCHRIFT

(11) **EP 3 027 491 B1**
(45) Veröffentlichungstag und Bekanntmachung des Hinweises auf die Patenterteilung: **14.03.2018**
(21) Anmeldenummer: 14739198.1
(22) Anmeldetag: 16.07.2014
(51) Int. Cl.: B62D 25/08, B62D 27/02, B62D 29/04

(54) **KAROSSERIE EINES FAHRZEUGS MIT EINEM RADHAUS**
BODY OF A VEHICLE HAVING A WHEEL HOUSING
CARROSSERIE D'UN VÉHICULE COMPRENANT UN PASSAGE DE ROUE

(30) Priorität: 29.07.2013 DE 102013214763
(43) Veröffentlichungstag der Anmeldung: 08.06.2016
(73) Patentinhaber: Bayerische Motoren Werke Aktiengesellschaft, 80809 München (DE)
(72) Erfinder: BEIL, Andreas, 80935 München (DE); SCHNAUFER, Thomas, 82386 Oberhausen (DE); SPITZER, Simon, 80339 München (DE)
(86) Internationale Anmeldenummer: PCT/EP2014/065297
(87) Internationale Veröffentlichungsnummer: WO 2015/014621

(56) Entgegenhaltungen:
- EP-A2- 1 619 109
- WO-A1-2012/105387

## Beschreibung

Die Erfindung betrifft eine Karosserie eines Fahrzeugs aus faserverstärktem Kunststoff mit einem Radhaus und einer dort angeordneten Federbeinabstützung.
Karosserie eines Fahrzeugs moderner Fahrzeuge, deren Sichtflächen außen und teilweise auch innen mit faserverstärktem Kunststoff gestaltet sind, sind aus vergleichsweise vielen unterschiedlichen Einzelkomponenten aufgebaut. Entsprechend ergibt sich die Problematik, dass diese Einzelkomponenten alle einzeln hergestellt und miteinander verbunden werden müssen. Die Folge sind hohe Werkzeug- und Montagekosten sowie ein erheblicher Aufwand für die Qualitätssicherung. Ferner ergeben sich Funktionsnachteile durch viele Bauteiltrennungen.
Ferner ist es an Karosseriebauteilen aus faserverstärktem Kunststoff nur schwer möglich, Anbindungspunkte für weitere Bauteile zur Verfügung zu stellen. Solche Anbindungspunkte müssen aufwendig mittels Einlegeteilen realisiert werden.
Aus der WO 2012/105387 A1 ist bereits eine Karosserie eines Fahrzeugs aus einem faserverstärkten Kunststoff mit einem Radhaus und einer dort angeordneten Federbeinabstützung bekannt. An die Karosserie ist über separate Verbindungselemente eine Vorderachse angebunden. Bei der Karosserie ist ein Stützträger vorgesehen, mit dem die Federbeinabstützung gestützt ist und der selbst an dm Radhaus angeordnet ist. Mit dem Stützträger ist ferner ein Halter eines Außenhautbauteils geschaffen. Erfindungsgemäß eine ist Karosserie eines Fahrzeugs aus faserverstärktem Kunststoff mit einem Radhaus und einer dort angeordneten Federbeinabstützung geschaffen, bei der ein einteiliger Stützträger vorgesehen ist, mit dem die Federbeinabstützung abgestützt ist und der selbst an dem Radhaus verklebt ist.

Mit dem derartigen erfindungsgemäßen Stützträger ist ein funktionsintegriertes und lastpfadoptimiertes Bauteil bereitgestellt, mittels dem eine Mehrzahl bisheriger Einzelbauteile aus faserverstärktem Kunststoff ersetzt werden können.

Dabei ist der Stützträger als Druckgussteil hergestellt. Als Werkstoff wird dabei vorzugsweise eine Aluminium- und/oder eine Manganlegierung verwendet. Mit dem Stützträger (26) ist ferner ein Halter (38) eines Außenhautbauteils der Karosserie (10) geschaffen, wobei zur Stabilisierung der Stützstruktur des Stützträgers (26) dieser mit einer Vielzahl Stützrippen (36) gestaltet ist, die am Stützträger (26) in Abhängigkeit der jeweils erforderlichen Stützkräfte über dessen Oberfläche verteilt sind.

Um die Stützwirkung des erfindungsgemäßen Stützträgers an der zugehörigen Karosserie des Fahrzeugs weiter zu verbessern, ist der Stützträger ferner vorteilhaft an einer Spritzwand der Karosserie verklebt. Die derartigen Verklebungen am Radhaus bzw. der Spritzwand können großflächig ausgebildet sein, so dass über sie hohe Stützkräfte zwischen Karosserie und Stützträger übertragen werden können.

Mit dem erfindungsgemäßen Stützträger ist ferner vorteilhaft ein Halter einer Gasfeder einer Haube des Fahrzeugs geschaffen, ein Halter eines Steuergeräts des Fahrzeugs geschaffen, ein Halter eines Wischermotors und/oder eines Wischwasserbehälters des Fahrzeugs geschaffen, ein Halter einer Sirene des Fahrzeugs geschaffen, ein Halter eines Wasserablaufschlauchs einer A-Säule der Karosserie geschaffen, ein Halter eines Tankeinfüllrohrs des Fahrzeugs geschaffen, und/oder ein Halter eines Außenhautbauteils der Karosserie geschaffen.

Insgesamt sind auf diese Weise zahlreiche Stützfunktionen auf den erfindungsgemäßen Stützträger integriert, so dass die Anzahl an Anbindungspunkten insbesondere in einem zum Radhaus benachbarten Motorraum ebenfalls reduziert werden kann. Es ergibt sich damit eine vorteilhafte Gewichts- und Kostenreduktion an dem erfindungsgemäßen Fahrzeug. Ferner ergeben sich Funktionsvorteile durch weniger Bauteiltrennungen und weniger Klebenähte.

Darüber hinaus kann der erfindungsgemäße Stützträger als einteiliges Bauteil im Reparaturfall durch einfache Abschnittsreparatur leichter repariert werden.

Nachfolgend wird ein Ausführungsbeispiel der erfindungsgemäßen Lösung anhand der beigefügten schematischen Zeichnungen näher erläutert. Es zeigt:

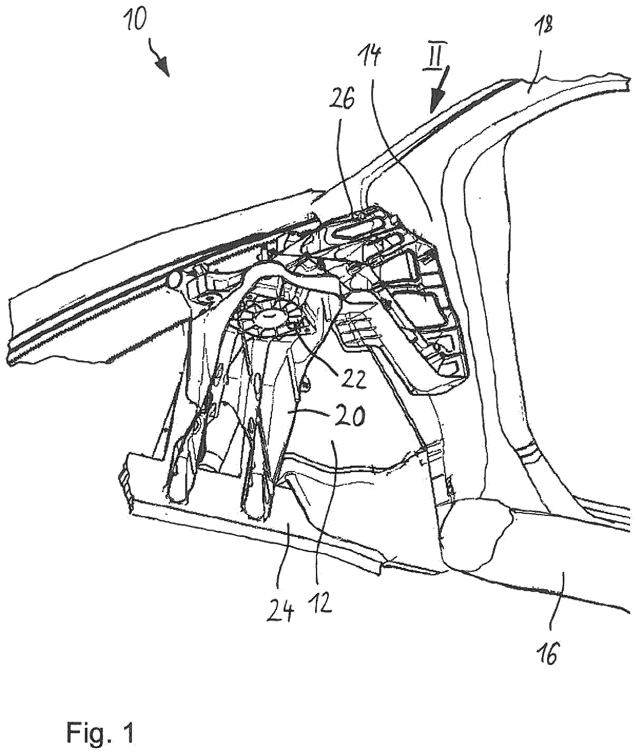

- Fig. 1: eine perspektivische Ansicht eines Teils eines Ausführungsbeispiels einer erfindungsgemäßen Karosserie mit deren Stützträger,

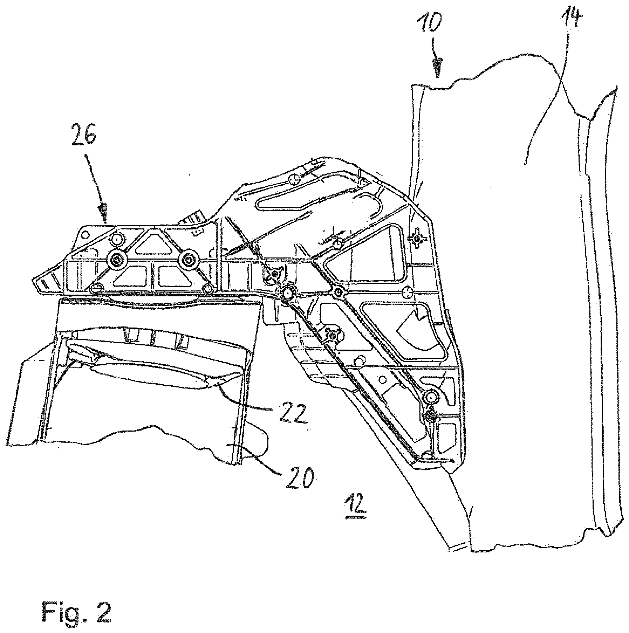

- Fig. 2: die Ansicht II in Fig. 2,

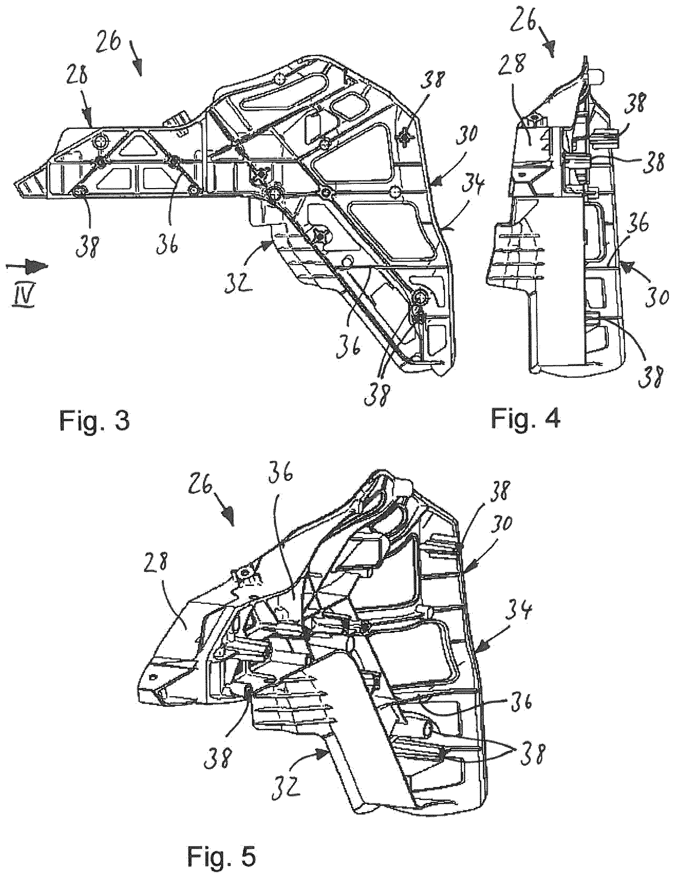

- Fig. 3: eine Seitenansicht gemäß Fig. 2 allein des Stützträgers,
- Fig. 4: die Ansicht IV gemäß Fig. 3 und
- Fig. 5: eine perspektivische Ansicht des Stützträgers.

Eine Karosserie 10 umfasst unter anderem ein linkes Radhaus 12, das sich bezogen auf die Fahrtrichtung des zugehörigen Fahrzeugs vor einer Spritzwand 14 befindet. Die Spritzwand 14 ist neben einem Seitenschweller 16 und einer A-Säule 18 ein Bestandteil einer (weiter nicht näher veranschaulichten) Fahrgastzelle des Fahrzeugs.

In dem Radhaus 12 befindet sich eine Federbeinabstützung 20 mit einer Abstützfläche 22 zum Abstützen eines nicht dargestellten Federbeins einer Radaufhängung des zugehörigen Fahrzeugs, welches vorliegend ein vierrädriger Personenkraftwagen ist. Die Federbeinabstützung 20 ist als ein in seinem oberen Bereich gewinkelter Träger gestaltet, der an seinem unteren Bereich an einem linken Längsträger 24 der Karosserie 10 ortsfest angebracht ist.

Über dem oberen, abgewinkelten Bereich der Federbeinabstützung 20, an dem unterseitig die Abstützfläche 22 für das zugehörige Federbein liegt, befindet sich ein Stützträger 26, der als eine einteilige Stützstruktur aus Aluminium-Druckguss hergestellt ist. Der Stützträger 26 ist ebenfalls gewinkelt mit einem weitgehend waagrechten Schenkel 28 und einem verstärkt senkrecht ausgerichteten Schenkel 30 gestaltet. Der waagrechte Schenkel 28 ragt von der Spritzwand 14 ausgehend über die Federbeinabstützung 20 und stützt diese von oben her ab. Der eher senkrechte Schenkel 30 ist mit einer ersten Klebefläche 32 gestaltet, mittels der er an dem Radhaus 12 flächig verklebt ist. Ferner befindet sich an dem Schenkel 30 eine zweite Klebefläche 34, mittels der der Stützträger 26 ferner auch an der Spritzwand 14 verklebt ist.

Zur Stabilisierung der Stützstruktur des Stützträgers 26 ist dieser mit einer Vielzahl Stützrippen 36 gestaltet, die am Stützträger 26 in Abhängigkeit der jeweils erforderlichen Stützkräfte über dessen Oberfläche verteilt sind. Ferner befinden sich an der Oberfläche des Stützträgers 26 an dessen zur Fahrzeugmitte bzw. einem dortigen Motorraum hin gewandten Seiten mehre Halter 38, insbesondere in Form von Gewindebohrungen. An diesen Haltern 38 kann dann bei der weiteren Montage des zugehörigen Fahrzeugs insbesondere eine Gasfeder einer Haube des Fahrzeugs, ein Steuergerät, ein Wischermotor und ein Wischwasserbehälter und/oder eine Sirene ortsfest angebracht werden. An der nach außen gewandten Seite des Stützträgers 26 befinden sich ebenfalls Halter 38. An diesen Haltern 38 kann ein Wasserablaufschlauch der A-Säule 18, ein Tankeinfüllrohr und/oder ein Außenhautbauteil der Karosserie 10 ortsfest angebracht werden.

### Bezugszeichenliste

- 10: Karosserie
- 12: Radhaus
- 14: Spritzwand
- 16: Seitenschweller
- 18: A-Säule
- 20: Federbeinabstützung
- 22: Abstützfläche
- 24: Längsträger
- 26: Stützträger
- 28: waagrechter Schenkel des Stützträgers
- 30: senkrechter Schenkel des Stützträgers
- 32: Klebefläche zum Radhaus
- 34: Klebefläche zur Spritzwand
- 36: Stützrippe
- 38: Halter

## Patentansprüche

1. Karosserie (10) eines Fahrzeugs aus faserverstärktem Kunststoff mit einem Radhaus (12) und einer dort angeordneten Federbeinabstützung (20), bei der ein einteiliger Stützträger (26) vorgesehen ist, mit dem die Federbeinabstützung (20) gestützt ist und der selbst an dem Radhaus (12) verklebt ist, wobei der Stützträger (26) als Druckgussteil hergestellt ist, und wobei mit dem Stützträger (26) ferner ein Halter (38) eines Außenhautbauteils der Karosserie (10) geschaffen ist, wobei zur Stabilisierung der Stützstruktur des Stützträgers (26) dieser mit einer Vielzahl Stützrippen (36) gestaltet ist, die am Stützträger (26) in Abhängigkeit der jeweils erforderlichen Stützkräfte über dessen Oberfläche verteilt sind.

2. Karosserie eines Fahrzeugs nach Anspruch 1, bei der der Stützträger (26) ferner an einer Spritzwand (14) der Karosserie (10) verklebt ist.

3. Karosserie eines Fahrzeugs nach einem der Ansprüche 1 oder 2, bei der mit dem Stützträger (26) ferner ein Halter (38) einer Gasfeder einer Haube des Fahrzeugs geschaffen ist.

4. Karosserie eines Fahrzeugs nach einem der Ansprüche 1 bis 3, bei der mit dem Stützträger (26) ferner ein Halter (38) eines Steuergeräts des Fahrzeugs geschaffen ist.

5. Karosserie eines Fahrzeugs nach einem der Ansprüche 1 bis 4, bei der mit dem Stützträger (26) ferner ein Halter (38) eines Wischermotors des Fahrzeugs geschaffen ist.

6. Karosserie eines Fahrzeugs nach einem der Ansprüche 1 bis 5, bei der mit dem Stützträger (26) ferner ein Halter (38) einer Sirene des Fahrzeugs geschaffen ist.

7. Karosserie eines Fahrzeugs nach einem der Ansprüche 1 bis 6, bei der mit dem Stützträger (26) ferner ein Halter (38) eines Wasserablaufschlauchs einer A-Säule (18) der Karosserie (10) geschaffen ist.

8. Karosserie eines Fahrzeugs nach einem der Ansprüche 1 bis 7,
bei der mit dem Stützträger (26) ferner ein Halter (38) eines Tankeinfüllrohrs des Fahrzeugs geschaffen ist.

## Claims

1. A body (10) of a vehicle made of fibre-reinforced plastics material, with a wheel housing (12) and a suspension strut support (20) arranged therein, in which a one-part supporting member (26) is provided with which the spring strut suspension (20) is supported and which itself is glued to the wheel housing (12), wherein the supporting member (26) is produced as a diecasting, and wherein further a holder (38) of an outer skin component of the body (10) is produced with the supporting member (26), wherein in order to stabilise the supporting structure of the supporting member (26) the latter is configured with a large number of supporting ribs (36) which are distributed on the supporting member (26) over the surface thereof as a function of the supporting forces necessary in each case.

2. A body of a vehicle according to Claim 1, in which the supporting member (26) further is glued to a splash panel (14) of the body (10).

3. A body of a vehicle according to one of Claims 1 or 2, in which further a holder (38) of a gas-filled telescopic strut of a bonnet of the vehicle is produced with the supporting member (26).

4. A body of a vehicle according to one of Claims 1 to 3, in which further a holder (38) of a control unit of the vehicle is produced with the supporting member (26).

5. A body of a vehicle according to one of Claims 1 to 4, in which further a holder (38) of a wiper motor of the vehicle is produced with the supporting member (26).

6. A body of a vehicle according to one of Claims 1 to 5, in which further a holder (38) of a siren of the vehicle is produced with the supporting member (26).

7. A body of a vehicle according to one of Claims 1 to 6, in which further a holder (38) of a water drain hose of an A-pillar (18) of the body (10) is produced with the supporting member (26).

8. A body of a vehicle according to one of Claims 1 to 7, in which further a holder (38) of a tank filler pipe of the vehicle is produced with the supporting member (26).

## Revendications

1. Carrosserie (10) de véhicule en un matériau synthétique renforcé par des fibres comportant un passage de roue (12) ainsi qu'un support de jambe de suspension (20) montée à ce niveau, dans laquelle il est prévu un porte appui (26) en une seule partie avec lequel s'appuie le support de jambe de suspension (20) et qui est lui-même collé sur le passage de roue (12), le porte appui (26) étant réalisé sous la forme d'une pièce coulée sous pression et, avec le porte appui (26) étant en outre réalisé un organe d'appui (38) d'une pièce en peau externe de la carrosserie (10), et, pour permettre la stabilisation de la structure d'appui du porte appui (26), celui-ci étant équipé d'un ensemble de nervures d'appui (36) qui sont réparties sur la surface du porte appui (26) en fonction des forces d'appui respectivement nécessaires.

2. Carrosserie de véhicule conforme à la revendication 1,
dans laquelle le porte appui (26) est en outre collé sur une paroi injectée (14) de la carrosserie (10).

3. Carrosserie de véhicule conforme à l'une des revendications 1 ou 2, dans laquelle avec le support d'appui (26) est en outre réalisé un organe d'appui (38) d'un ressort pneumatique du capot du véhicule.

4. Carrosserie de véhicule conforme à l'une des revendications 1 à 3, dans laquelle avec le porte appui (26), est en outre réalisé un organe d'appui (38) d'un appareil de commande du véhicule.

5. Carrosserie de véhicule conforme à l'une des revendications 1 à 4, dans laquelle avec le porte appui (26), est en outre réalisé un organe d'appui (38) d'un moteur d'essuie-glace du véhicule.

6. Carrosserie de véhicule conforme à l'une des revendications 1 à 5, dans laquelle avec le porte appui (26), est en outre réalisé un organe d'appui (38) d'une sirène du véhicule.

7. Carrosserie de véhicule conforme à l'une des revendications 1 à 6, dans laquelle avec le porte appui (26), est en outre réalisé un organe d'appui (38) d'un tube d'évacuation d'eau de la colonne A (18) de la carrosserie (10).

8. Carrosserie de véhicule conforme à l'une des revendications 1 à 7, dans laquelle avec le porte appui (26), est en outre réalisé un organe d'appui (38) d'un tube de remplissage du réservoir du véhicule.
